# EUROPEAN PATENT SPECIFICATION

(11) **EP 3 960 408 B1**
(45) Date of publication and mention of the grant of the patent: **18.01.2023**
(21) Application number: 21190372.9
(22) Date of filing: 09.08.2021
(51) Int. Cl.: B27M 1/08, B23Q 7/14, B25J 9/02, B27B 31/00

(54) **APPARATUS FOR THE AUTOMATIC LOADING/UNLOADING OF PARTS FOR A MACHINE FOR PROCESSING ROD-LIKE ELEMENTS AND MACHINE FOR PROCESSING ROD-LIKE ELEMENTS WITH SUCH AN APPARATUS**
VORRICHTUNG ZUM AUTOMATISCHEN LADEN/ENTLADEN VON TEILEN FÜR EINE MASCHINE ZUM BEARBEITEN VON STABFÖRMIGEN ELEMENTEN UND MASCHINE ZUM BEARBEITEN VON STABFÖRMIGEN ELEMENTEN MIT EINER SOLCHEN VORRICHTUNG
APPAREIL DE CHARGEMENT/DÉCHARGEMENT AUTOMATIQUE DE PIÈCES POUR UNE MACHINE DE TRAITEMENT D'ÉLÉMENTS EN FORME DE TIGE ET MACHINE DE TRAITEMENT D'ÉLÉMENTS EN FORME DE TIGE COMPORTANT UN TEL APPAREIL

(30) Priority: 27.08.2020 IT 202000020506
(43) Date of publication of application: 02.03.2022
(73) Proprietor: SaoMad 2 S.r.l., 35011 Campodarsego, Frazione Reschigliano PD (IT)
(72) Inventor: CAMPORESE, Dario, 35010 VIGODARZERE PD (IT)
(74) Representative: Modiano, Micaela Nadia

(56) References cited:
- DE-A1-102011 076 595
- US-A1- 2004 261 485
- US-A1- 2018 001 508
- US-B1- 8 960 244

## Description

The present invention relates to an apparatus for the automatic loading/unloading of parts for a machine for processing rod-like elements.

The invention also relates to a machine for processing rod-like elements with such an apparatus.

The invention can be applied industrially in the field of wood processing, particularly in the processing of wood parts for doors or windows.

Currently, for the processing of wood parts intended to provide doors or windows, longitudinally extended machines are used which comprise:
- a worktable and/or a part supporting carriage,
- one or more processing heads,
- a sliding guide of the part supporting carriage which has an axis of extension that is parallel to the axis of extension of the machine and passes through the region in which the processing heads are arranged.

The blank part, which is longitudinally extended, is picked up from a storage area, manually or by means of grip devices, and arranged on the part supporting carriage upstream of the processing heads.

The carriage moves and crosses the region in which there are the processing heads, which perform the required operations on the blank part, providing the finished part, which is then unloaded and/or picked up, downstream of the processing heads, by means of pushers and/or conveyor belts and/or manually and/or by means of other grip devices, and stored in a second storage area for the finished parts.

These storage areas are normally constituted by carriages which have a plurality of storage levels, into which the various parts are to be inserted.

The finished wood parts are then assembled to provide the door or window.

This background art has some drawbacks.

Normally, the operation for loading and unloading the wood parts on and from the part supporting carriage is performed manually or by means of grip devices, and the single blank part must be picked up from the first storage carriage, arranged along the axis of movement of the part supporting carriage, upstream of the processing heads, then picked up, once finished, downstream of the processing heads, again manually or by means of grip devices, and moved it to a second storage carriage, for the finished parts, and stored therein after arranging it parallel to its main axis of extension.

This produces long and awkward loading and unloading operations and the need for the supervision of an operator.

Moreover, with currently known loading and unloading apparatuses it is not possible to load and/or unload a carriage with the parts automatically in a certain order, but the intervention of an operator is always necessary for this purpose.

Moreover, currently the apparatuses for loading/unloading parts on or from the wood processing machine are generally separated from it and need a dedicated control panel.

Furthermore, in apparatuses of the known type, on the carriages there are conveyor belts adapted to move the parts gradually in order to move them closer, in the loading operations, or away, in the unloading operations, with respect to the grip device, which has a single loading/unloading position/configuration with respect to the carriages, and this entails a constructively complex apparatus and a significant space occupation.

The aim of the present invention is to provide an apparatus for the loading/unloading of parts for a machine for processing rod-like elements that is capable of improving the background art in one or more of the aspects mentioned above.

Within this aim, an object of the invention is to provide an apparatus for the loading/unloading of parts for a machine for processing rod-like elements that allows to load/unload the parts on the part supporting carriage and/or on the worktable in an automatic manner and without the intervention of the operator.

Another object of the invention is to provide an apparatus for the automatic loading/unloading of parts for a machine for processing rod-like elements that allows to arrange the parts in the storage area according to a preset order.

Another object of the invention is to provide an apparatus for the automatic loading/unloading of parts for a machine for processing rod-like elements that can be associated directly therewith, reducing the overall space occupation with respect to similar apparatuses of the known type and using a movement axis of the machine with which it is associated.

A still further object of the present invention is to overcome the drawbacks of the background art in a manner that is alternative to any existing solutions.

A further object of the invention is to provide a machine for processing rod-like elements that comprises an apparatus for the automatic loading/unloading of parts capable of achieving the aim and objects listed above.

Not least object of the invention is to provide an apparatus for the automatic loading/unloading of parts for a machine for processing rod-like elements and a machine for processing rod-like elements with such an apparatus that are highly reliable, relatively easy to provide and at competitive costs.

This aim and these and other objects which will become better apparent hereinafter are achieved by an apparatus as set out in the appended set of claims.

Further characteristics and advantages of the invention will become better apparent from the description of a preferred but not exclusive embodiment of the apparatus for the loading/unloading of parts for a machine for processing rod-like elements according to the invention, illustrated by way of non-limiting example in the accompanying drawings, wherein:
Figure 1 is a perspective view of an apparatus for the automatic loading/unloading of parts for a machine for processing rod-like elements, according to the invention, in an application thereof;
Figure 2 is a top view of the application of the apparatus for the automatic loading/unloading of parts for a machine for processing rod-like elements of Figure 1;

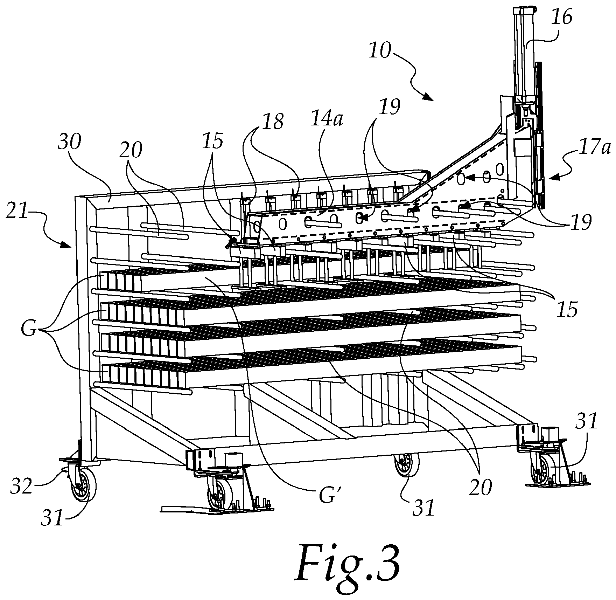

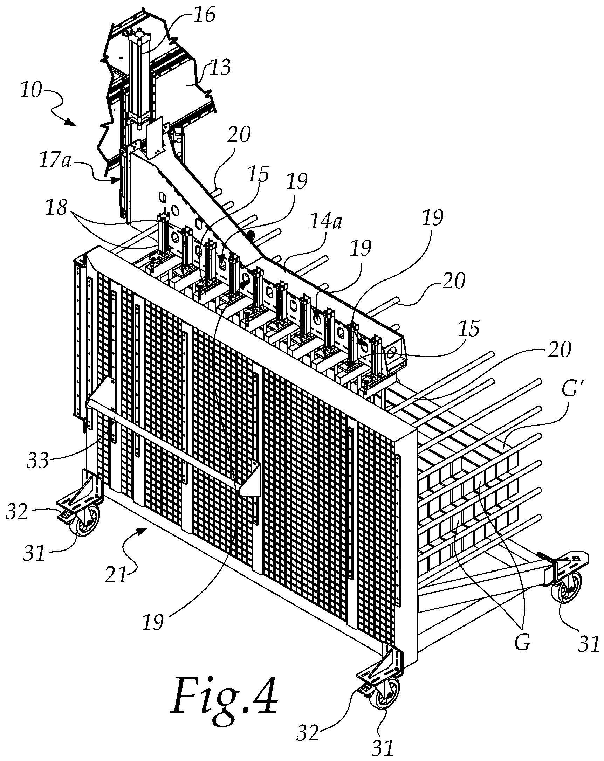

Figures 3 and 4 are two different perspective views of a detail of the apparatus of Figure 1;

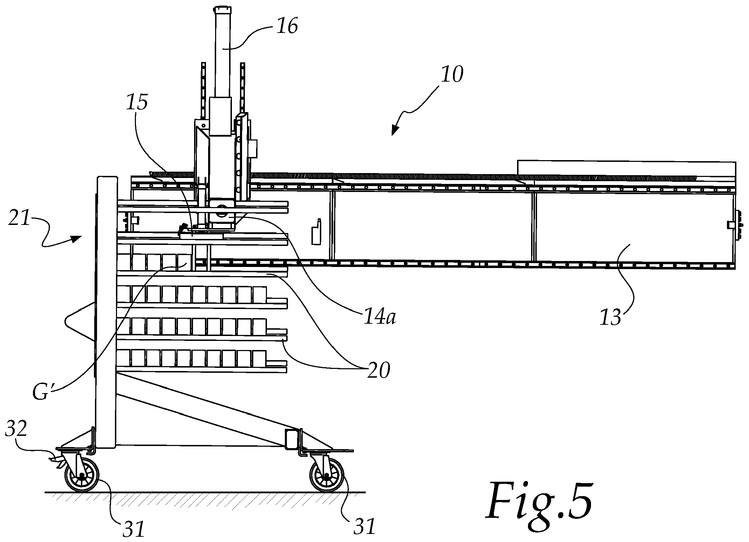

Figure 5 is a side view of the detail of Figure 3 and 4.

With reference to the figures, an apparatus for the automatic loading/unloading of parts for a machine for processing rod-like elements according to the invention is generally designated by the reference numeral 10.

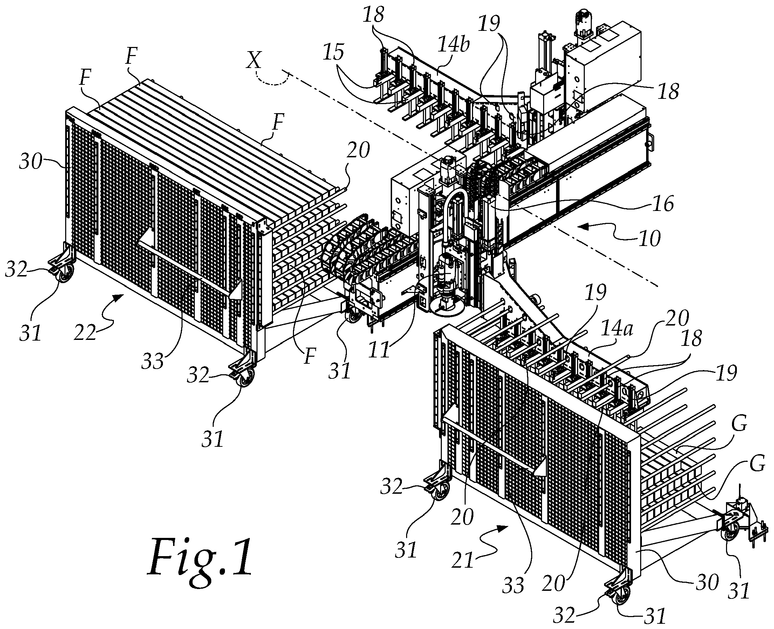

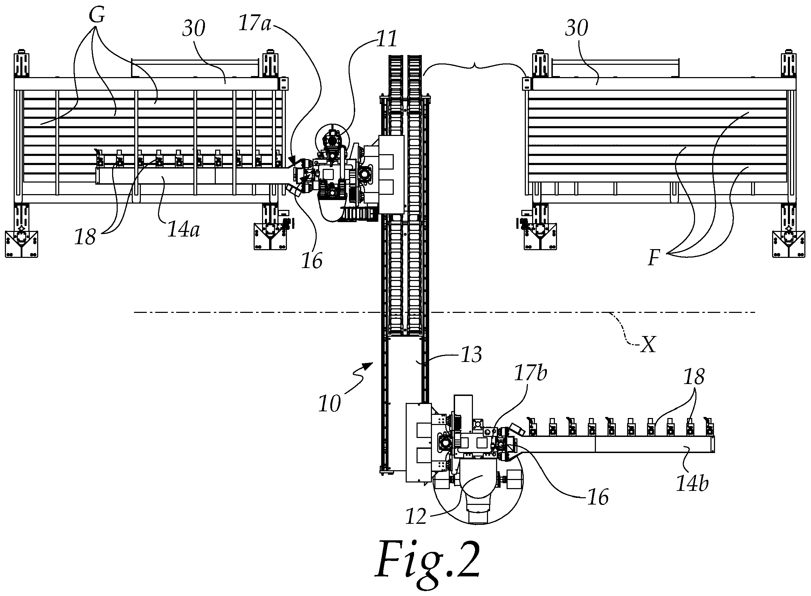

Figures 1 and 2 show an application of the apparatus 10.

The apparatus 10 is applied to a machine for processing rod-like elements, shown only partially in the figures, which comprises two processing heads 11 and 12.

The apparatus 10 comprises:
- a longitudinally extended guide 13,
- two grip arms 14a, 14b which are extended at right angles to the guide 13 and can slide along it.

Each arm 14a, 14b has a plurality of grippers 15 arranged along its axis of extension.

The grippers 15 operate vertically, below the respective arm 14a, 14b.

These arms 14a, 14b have a quadrangular transverse cross-section.

The expression "transverse cross-section" in the present description is understood to refer to the cross-section on the plane at right angles to the axis of extension.

In particular, the arms 14a, 14b, when aligned, are substantially mirror-symmetrical with respect to the guide 13.

Each arm 14a, 14b is coupled at a first end 17a, 17b to the guide 13.

One of the particularities of the invention resides in that the grip arm 14a, 14b can be associated directly with a processing head 11, 12 of the machine for processing rod-like elements.

In particular, the arm 14a, 14b is associated with a respective processing head 11, 12 of the machine for the processing of rod-like elements, in said first end 17a, 17b.

The possibility to associate the grip arm 14a, 14b directly with the processing head 11, 12 of the machine for processing rod-like elements allows to reduce the overall space occupation and to use for the apparatus 10 at least one processing and movement axis that is already present in the machine, the one of the processing head 11, 12.

Such apparatus 10 comprises first means for the horizontal movement of each arm 14a, 14b along said guide 13, not shown in the figures, such as for example a slider.

The first movement means are arranged at the first end 17a, 17b.

The apparatus 10 comprises furthermore second means 16 for the vertical movement of each arm 14a, 14b at the first end 17a, 17b.

The second means 16 comprise, for example, a linear actuator and/or a pneumatic piston.

The apparatus 10 comprises third means 18 for the movement of each one of said grippers 15, which are associated with a lateral surface of the respective arm 14a, 14b.

In the present description, the expression "lateral surface of the respective arm 14a, 14b" is understood to refer to the surface of the arm 14a, 14b, comprised between the upper one and the lower one, in the configuration for use, that is parallel to the axis of extension of said arm 14a, 14b.

The third movement means 18 comprise, for example, a linear actuator and/or a pneumatic piston.

Each arm 14a, 14b has a plurality of through holes 19, adapted, if necessary, to each correspond to one bar 20 of a storage carriage 21, 22 and to allow the passage thereof.

In particular, the holes 19 have an axis of extension comprised between the lateral surfaces of the respective arm 14a, 14b, and at least some of them are interposed between two successive third movement means 18.

The apparatus 10 comprises at least one carriage 21, 22 for the storage of the parts, with an axis of extension that is parallel to the axis of extension of the arm 14a, 14b.

The example shown in the figures shows two carriages 21 and 22, respectively a loading carriage 21 and an unloading carriage 22.

Another particularity of the invention is that each carriage 21, 22 has superimposed levels for the accommodation of wood parts, each one of said levels being defined by a plurality of parallel and coplanar bars 20, which extend from a supporting wall 30.

For example, the levels can be six or ten and can each accommodate up to ten parts G, G', F.

The carriages 20, 21 are provided with wheels 31 so that they can be moved before and after the processes of the machine.

At least two of the wheels 31 furthermore have stop elements 32, in order to block them when the carriage 21, 22 is in a suitable position, and a handle 33 in order to facilitate the movement of the carriage 21, 22 by the operator.

In particular, the levels of the carriages 21, 22, which are defined by a plurality of parallel and coplanar bars 20, and the presence of a plurality of through holes 19 adapted to correspond to them and to allow their passage, allow the arm 14a, 14b to advance on the horizontal plane on each level of the carriage 21, 22 in order to progressively load/unload the parts without the need to perform these operations manually or by means of adapted conveyor belts, as occurs in currently known apparatuses.

With particular reference to Figures 1 and 2, the apparatus 10 is applied to a machine for processing rod-like elements which is shown only in its processing heads 11, 12 and has a longitudinal extension along an axis X which is at right angles to the axis of extension of the guide 13.

The axis of extension X of the machine for processing rod-like elements is parallel to the axes of extension of the arms 14a, 14b and to the predominant direction of extension of the carriages 21 and 22.

In this manner, it is not necessary to arrange the parts picked up upstream of the processing heads 11, 12, or downstream of them, along the axis of movement of the part supporting carriage, which coincides with the extension axis X of the processing machine, since the blank parts are already arranged parallel thereto and it is sufficient to translate them.

The operation of the apparatus 10 is as follows.

The arm 14a moves along the guide 13 until it reaches the loading carriage 21, which accommodates the blank wood parts G to be processed with the wood processing machine.

The arm 14a descends, by virtue of the second movement means 16, to the level with the first available blank part G', optionally moves horizontally by virtue of the first movement means so that the plurality of grippers 15 can close on the first blank part G'.

The grippers 15 move simultaneously and in a coordinated manner.

The loading of the parts in the machine for processing rod-like elements occurs by unloading the loading carriage 21, clearing its levels from the top toward the bottom.

The arm 14a then moves and carries the first blank part G' onto the worktable and/or onto the part supporting carriage, not shown in the figures, which slides, passing through the processing heads 11 and 12, in order to obtain a finished part F.

At this point, the other arm 14b picks up the finished part F, using the third means 18 for the movement of the grippers 15, the second means 16 for the vertical movement of the arm 14b and the first means for horizontal movement.

Then the arm 14b unloads the finished part F onto the unloading carriage 22, at the first free place.

The unloading carriage 22 is loaded by filing the levels from the bottom upward.

It should be noted that the apparatus 10 can be applied directly to the machine for processing rod-like elements, using at least one processing axis thereof, i.e., the vertical axis of the heads 11, 12.

This makes it possible to reduce the space occupation with respect to similar installations of the known type.

The movement of the arms 14a, 14b is managed by means of a control element, not shown in the figures, which also manages the machine for processing rod-like elements.

By means of such control element it is possible to automatically program the operations for loading/unloading the wood parts so that the apparatus can process without the supervision of an operator and so as to unload the finished parts F in a certain preset order, which is useful to the subsequent steps of assembly of the door or window.

For example, it is possible to load/unload wood parts so as to have in succession two posts and two crossmembers in order to facilitate the operations for the assembly of the door or window.

The apparatus 10 can have a plurality of sensors adapted to detect the dimensions of the blank parts G, in particular the length, in order to adjust the processes necessary for them.

In another embodiment, not shown in the figures, the axis of extension of the processing machine corresponds to the axis of extension of the guide 13 and the apparatus 10 also comprises means for rotating the arm 14a, 14b, at the first end 17a, 17b.

In this case, the loading/unloading carriages can be arranged at right angles to the direction of extension of the machine and the parts are aligned with the sliding direction of the part supporting carriage by rotating the grip arm by virtue of said rotation means.

In practice it has been found that the invention achieves the intended aim and objects, providing an apparatus for the loading/unloading of parts for a machine for processing rod-like elements that allows to load/unload the parts on the part supporting carriage and/or on the worktable in an automatic manner and without the intervention of the operator.

The invention provides an apparatus for the automatic loading/unloading of parts for a machine for processing rod-like elements that allows to arrange the parts, in the storage area, according to a preset order.

Furthermore, the invention provides an apparatus for the automatic loading/unloading of parts for a machine for processing rod-like elements that can be associated directly therewith, reducing the overall space occupations with respect to similar apparatuses of the known type and using a movement axis of the machine with which it is associated.

Finally, the invention provides a machine for processing rod-like elements with such an apparatus.

The invention thus conceived is susceptible of numerous modifications and variations, all of which are within the scope of the appended claims; all the details may furthermore be replaced with other technically equivalent elements.

In practice, the materials used, so long as they are compatible with the specific use, as well as the contingent shapes and dimensions, may be any according to the requirements and the state of the art.

The application claims priority from Italian Patent Application No. 102020000020506 .

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus (10) for the automatic loading/unloading of parts (G,G',F) for a machine (11, 12) for processing rod-like elements, said apparatus (10) comprising:
- a longitudinally extended guide (13),
- at least one grip arm (14a, 14b) which is extended at right angles to said guide (13) and can slide along it, said at least one grip arm (14a, 14b) having a plurality of grippers (15) arranged along its axis of extension, and
- at least one carriage (21, 22) for the storage of said parts (G,G',F), with an axis of extension that is parallel to the axis of extension of said at least one arm (14a, 14b), said at least one carriage having a plurality of superimposed levels for the accommodation of said parts (G,G',F) said at least one arm (14a, 14b) is coupled at a first end (17a, 17b) to said guide,
**characterized in that** the apparatus (10) comprises second means (16) for the vertical movement of said at least one arm (14a, 14b) at said first end (17a, 17b).

2. The apparatus (10) according to claim 1, **characterized in that** it comprises first means for the horizontal movement of said at least one arm (14a, 14b) along said guide (13), said first movement means being arranged at said first end (17a, 17b).

3. The apparatus (10) according to claim 2 , **characterized in that** said first movement means comprise a slider.

4. The apparatus (10) according to one or more of the preceding claims, **characterized in that** said second movement means (16) comprise a linear actuator and/or a pneumatic piston.

5. The apparatus (10) according to one or more of the preceding claims, **characterized in that** it comprises third means (18) for the movement of each one of said grippers (15).

6. The apparatus (10) according to claim 5, **characterized in that** said third movement means (18) comprise a linear actuator and/or a pneumatic piston.

7. The apparatus (10) according to one or more of the preceding claims, **characterized in that**:
- said at least one arm (14a, 14b) is provided with a plurality of through holes (19),
- each one of said levels of said at least one carriage (21, 22) is formed by a plurality of parallel and coplanar bars (20), which extend from a supporting wall (30),
said through holes (19) being adapted to each correspond to one of said bars (20) and allow the passage thereof.

8. The apparatus (10) according to one or more of the preceding claims, **characterized in that** said at least one arm (14a, 14b) can be associated with a processing head (11, 12) of said machine for the processing of rod-like elements.

9. The apparatus (10) according to one or more of the preceding claims, **characterized in that** it comprises two grip arms (14a, 14b).

10. A machine for processing rod-like elements, comprising at least one processing head (11, 12), said machine being **characterized in that** it comprises an apparatus (10) for the automatic loading/unloading of parts according to one or more of the preceding claims, said at least one grip arm (14a, 14b) being directly associated with said at least one processing head (11, 12).

## Patentansprüche

1. Eine Vorrichtung (10) zum automatischen Einladen/Ausladen von Teilen (G,G',F) für eine Maschine (11, 12) zum Bearbeiten stabförmiger Elemente, wobei die Vorrichtung (10) Folgendes umfasst:
- eine sich in Längsrichtung erstreckende Führung (13),
- mindestens einen Greifarm (14a, 14b), der sich in rechten Winkeln zu der Führung (13) erstreckt und entlang derselben gleiten kann, wobei der mindestens eine Greifarm (14a, 14b) eine Vielzahl von Greifern (15) hat, die entlang seiner Erstreckungsachse angeordnet sind, und
- mindestens einen Schlitten (21, 22) zur Aufbewahrung der Teile (G, G', F), mit einer Erstreckungsachse, die parallel zur Erstreckungsachse des mindestens einen Arms (14a, 14b) ist, wobei der mindestens eine Schlitten eine Vielzahl übereinander angeordneter Ebenen für die Aufnahme der Teile (G, G', F) hat;
der mindestens eine Arm (14a, 14b) ist an einem ersten Ende (17a, 17b) mit der Führung gekoppelt;
**dadurch gekennzeichnet, dass** die Vorrichtung (10) an dem ersten Ende (17a, 17b) zweite Mittel (16) für die vertikale Bewegung des mindestens einen Arms (14a, 14b) umfasst.

2. Die Vorrichtung (10) gemäß Anspruch 1,
**dadurch gekennzeichnet, dass** sie erste Mittel für die horizontale Bewegung des mindestens einen Arms (14a, 14b) entlang der Führung (13) umfasst, wobei die ersten Bewegungsmittel an dem ersten Ende (17a, 17b) angeordnet sind.

3. Die Vorrichtung (10) gemäß Anspruch 2, **dadurch gekennzeichnet, dass** die ersten Bewegungsmittel einen Schieber umfassen.

4. Die Vorrichtung (10) gemäß einem oder mehreren der obigen Ansprüche, **dadurch gekennzeichnet, dass** die zweiten Bewegungsmittel (16) einen Linearantrieb und/oder einen Pneumatikkolben umfassen.

5. Die Vorrichtung (10) gemäß einem oder mehreren der vorigen Ansprüche, **dadurch gekennzeichnet, dass** sie dritte Mittel (18) für die Bewegung jedes der Greifer (15) umfasst.

6. Die Vorrichtung (10) gemäß Anspruch 5, **dadurch gekennzeichnet, dass** die dritten Bewegungsmittel (18) einen Linearantrieb und/oder einen Pneumatikkolben umfassen.

7. Die Vorrichtung (10) gemäß einem oder mehreren der obigen Ansprüche, **dadurch gekennzeichnet, dass**
- der mindestens eine Arm (14a, 14b) mit einer Vielzahl von Durchgangslöchern (19) versehen ist,
- jede der Ebenen des mindestens einen Schlittens (21, 22) von einer Vielzahl paralleler und koplanarer Stangen (20) gebildet wird, die sich von einer tragenden Wand (30) erstrecken,
die Durchgangslöcher (19) ausgebildet sind, um jeweils einer der Stangen (20) zu entsprechen und ihre Hindurchführung zu ermöglichen.

8. Die Vorrichtung (10) gemäß einem oder mehreren der obigen Ansprüche, **dadurch gekennzeichnet, dass** der mindestens eine Arm (14a, 14b) mit einem Bearbeitungskopf (11, 12) der Maschine zum Bearbeiten stabförmiger Elemente verbunden werden kann.

9. Die Vorrichtung (10) gemäß einem oder mehreren der obigen Ansprüche, **dadurch gekennzeichnet, dass** sie zwei Greifarme (14a, 14b) umfasst.

10. Eine Maschine zum Bearbeiten stabförmiger Elemente, die mindestens einen Bearbeitungskopf (11, 12) umfasst, wobei die Maschine **dadurch gekennzeichnet ist, dass** sie eine Vorrichtung (10) zum automatischen Einladen/Ausladen von Teilen gemäß einem oder mehreren der obigen Ansprüche umfasst, wobei der mindestens eine Greifarm (14a, 14b) direkt mit dem mindestens einen Bearbeitungskopf (11, 12) verbunden ist.

## Revendications

1. Appareil (10) pour le chargement/déchargement automatique de pièces (G, G', F) pour une machine (11, 12) pour traiter des éléments du type tige, ledit appareil (10) comprenant :
- un guide (13) étendu longitudinalement,
- au moins un bras (14a, 14b) de préhension qui est étendu à angle droit avec ledit guide (13) et peut coulisser le long de celui-ci, ledit au moins un bras (14a, 14b) de préhension ayant une pluralité de préhenseurs (15) agencés le long de son axe d'extension, et
- au moins un chariot (21, 22) pour le stockage desdites pièces (G, G', F), avec un axe d'extension qui est parallèle à l'axe d'extension dudit au moins un bras (14a, 14b), ledit au moins un chariot ayant une pluralité de niveaux superposés pour la réception desdites pièces (G, G', F)
ledit au moins un bras (14a, 14b) est couplé à une première extrémité (17a, 17b) audit guide,
**caractérisé en ce que** l'appareil (10) comprend des deuxièmes moyens (16) pour le mouvement vertical dudit au moins un bras (14a, 14b) à ladite première extrémité (17a, 17b) .

2. Appareil (10) selon la revendication 1, **caractérisé en ce qu'**il comprend des premiers moyens pour le mouvement horizontal dudit au moins un bras (14a, 14b) le long dudit guide (13), lesdits premiers moyens de mouvement étant agencés à ladite première extrémité (17a, 17b).

3. Appareil (10) selon la revendication 2, **caractérisé en ce que** lesdits premiers moyens de mouvement comprennent un coulisseau.

4. Appareil (10) selon une ou plusieurs des revendications précédentes, **caractérisé en ce que** lesdits deuxièmes moyens (16) de mouvement comprennent un actionneur linéaire et/ou un piston pneumatique.

5. Appareil (10) selon une ou plusieurs des revendications précédentes, **caractérisé en ce qu'**il comprend des troisièmes moyens (18) pour le mouvement de chacun desdits préhenseurs (15).

6. Appareil (10) selon la revendication 5, **caractérisé en ce que** lesdits troisièmes moyens (18) de mouvement comprennent un actionneur linéaire et/ou un piston pneumatique.

7. Appareil (10) selon une ou plusieurs des revendications précédentes, **caractérisé en ce que** :
- ledit au moins un bras (14a, 14b) est pourvu d'une pluralité de trous débouchants (19),
- chacun desdits niveaux dudit au moins un chariot (21, 22) est formé par une pluralité de barres (20) parallèles et coplanaires, qui s'étendent à partir d'une paroi de support (30),
lesdits trous débouchants (19) étant adaptés pour correspondre chacun à une desdites barres (20) et permettre le passage de celle-ci.

8. Appareil (10) selon une ou plusieurs des revendications précédentes, **caractérisé en ce que** ledit au moins un bras (14a, 14b) peut être associé à une tête de traitement (11, 12) de ladite machine pour le traitement d'éléments du type tige.

9. Appareil (10) selon une ou plusieurs des revendications précédentes, **caractérisé en ce qu'**il comprend deux bras (14a, 14b) de préhension.

10. Machine pour traiter des éléments du type tige, comprenant au moins une tête de traitement (11, 12), ladite machine étant **caractérisée en ce qu'**elle comprend un appareil (10) pour le chargement/déchargement automatique de pièces selon une ou plusieurs des revendications précédentes, ledit au moins un bras (14a, 14b) de préhension étant directement associé à ladite au moins une tête de traitement (11, 12).
